# EUROPEAN PATENT APPLICATION

(11) **EP 2 087 794 A1**
(43) Date of publication of application: **12.08.2009**
(21) Application number: 08020374.8
(22) Date of filing: 24.11.2008
(51) Int. Cl.: A23K 1/10, A23K 1/18

(54) **Animal feed containing flour from Eisenia foetida**

(30) Priority: 22.11.2007 ES 200703212
(71) Applicant: Fernández Molina, José Antonio, 03201 Elche Alicante (ES); Marhuenda Sánchez, Antonio, 03130 Santa Pola (Alicante) (ES); Hamad Mora, Jaled, 03130 Santa Pola (Alicante) (ES); Navamuel Bajos, Teresa, 03130 Santa Pola (Alicante) (ES); Pintor Just, Jesús Jeronimo, 03130 Santa Pola (Alicante) (ES)
(72) Inventor: Fernández Molina, José Antonio, 03201 Elche Alicante (ES); Marhuenda Sánchez, Antonio, 03130 Santa Pola (Alicante) (ES); Hamad Mora, Jaled, 03130 Santa Pola (Alicante) (ES); Navamuel Bajos, Teresa, 03130 Santa Pola (Alicante) (ES); Pintor Just, Jesús Jeronimo, 03130 Santa Pola (Alicante) (ES)
(74) Representative: Tolan, Olivia

(57) **Abstract**

Earthworm flour from the species *Eisenia foetida* is a material for domestic animal feed. Feeds can contain 0.01-0.1% of the earthworm flour.

## Description

### Object of the invention

This invention discloses a method of preparing feeds composed in whole or in part of earthworm flour (*Eisenia foetida*).

### State of the art

The earthworm *Eisenia foetida* is an organism **characterised in that** it has outstanding properties for the detection of soils rich in heavy metals and other contaminants (Lukkari et al., 2005). This organism has numerous biological molecules of interest, including a group of proteins that exhibit activity against pathogenic bacteria. Said proteins limit the growth of these bacteria, with the consequent benefit (Prochazkova et al., 2006).

Although *Eisenia foetida* has specific proteins in terms of biochemical functions, these earthworms generally exhibit a high protein content, which may even exceed 60% of the organism's dry weight (Velásquez et al., 1986). A great advantage is that this earthworm grows very rapidly and reproduces easily, even though its diet only includes organic waste. In addition to being a protein-rich organism, this earthworm is an outstanding source of amino acids. This organism contains 20 of the 24 major amino acids, including the 10 essential ones, particularly lysine, an amino acid that is present in low quantities in most food sources (Albarrán 1996). In terms of percentages, the content of this amino acid may be practically 6% of the earthworm's dry weight; for this reason, *Eisenia* is one of the best known sources of this amino acid (Segovia, 1996).

On the other hand, these earthworms have an acceptable mineral and vitamin content, particularly of vitamin A and group B vitamins (Vielma et al., 2001). Furthermore, as mentioned above, these earthworms have good bacteriological properties (Medina et al., 1999).

Feeding pets and animals raised to obtain meat, such as cattle, requires the use of 157 million metric tons of cereals, legumes and vegetable proteins in order to obtain about 28 million metric tons of beef for human consumption (Rifkin, 2002). Therefore, it is important to consider the possibility of enriching cereal feeds with flour from *Eisenia foetida* to make preparations that are more nutritional and to allow exploitation of a valuable source of proteins and amino acids in a more rational matter. This will achieve a double effect, since, in addition to enriching the diet of those animals which receive this feed, the proportion of cereal in the final preparation may be reduced, which entails economic and social benefits.

There are some patents that address the use or handling of these earthworms. In particular, some disclose the manufacturing thereof (KR840000458B), as well as devices designed to raise them (KR850000919B) or equipment designed to dry the earthworms (KR8400595Y) or to prepare earthworm dry powder (CN1114883). It has not been possible to find any patent that reflects the use of the earthworm *Eisenia foetida* for the purposes claimed in this patent. Patents CN1493201 and CN1212074C deal with the preparation of an earthworm peat primarily designed for medical-veterinary purposes. Patent JP2003259837 discloses the use of earthworms and the subsequent extraction of the amino acids thereof to prepare health products. Neither of the above-mentioned cases show applications related to this invention.

### References

Velásquez L, Herrera C, Ibáñez I. Harina de Iombriz. I Parte: Obtención, composición química, valor nutricional y calidad bacteriológica. Alimentos 1986; 11 (1): 15-21.

Albarrán GN. Formulación de alimentos concentrados para animales a partir de harina de lombriz. [Bachelor's Degree Thesis, Engineering]. Food Science Laboratory. Mérida-Venezuela. University of Los Andes. 1996.

Segovia, E. Análisis físico-químico de la harina de lombriz Eisenia foetida. [Bachelor's Degree Thesis, Engineering]. Lima-Peru. La Molina Agricultural University; 1996.

Prochazkova P., Silerova M., Felsberg J., Joskova R., Beschin A., De Baetselier P., and Bilej M. Relationship between hemolytic molecules in Eisenia foetida earthworms. Developmental and Comparative Immunology 30 381-392; 2006.

Lukkari T., Aatsinki M., Vaisanen A. and Haimi J. Toxicity of copper and zinc assessed with three different earthworm tests. Applied Soil Ecology 30 133-146; 2005.

Vielma R, Carrero P, Rondón C, Medina A. Contenido de minerales y elementos trazas en la haring de lombriz californiana (Eisenia foetida). 51st Annual Convention of the Venezuelan Association for the Advancement of Science (AsoVAC); 2001 Nov 16-21. National Experimental University of Táchira, Táchira-Venezuela.

Rifkin J. Ante una auténtica crisis alimentaria global. [quoted in the daily newspaper El PAIS.ES, Spain, 10 June 2002]. Available at: http://www.elpais.es/articulo.html?anchor=elpepiopl&xref=20020610elpepiopi_8 &type=Tes&date).

### Detailed description of the invention

The invention provides a method of obtaining a nutritional feed for dogs and cats, which contains a variable quantity of earthworm (*Eisenia foetid*) flour that may range between 1 kg of earthworm flour for every 1,000 kg of feed and 100 kg of earthworm flour for every 1,000 kg of feed. Dogs and cats do not have the same protein needs, since dogs are omnivores, whereas cats are exclusively carnivores; consequently, the feeds prepared for their nutrition will require different compositions in terms of proteins and amino acids.

The invention is designed for feeding domestic animals, dogs and cats, in such a way that the final feed contains, in addition to the earthworm flour, proteins, lipids, carbohydrates, vitamins and minerals that are necessary for the pets' correct nutrition. Similarly, the final feed may contain pigments, colouring agents, antioxidants, enzymes, preservatives and any other compounds commonly used for feeding domestic animals.

This invention exhibits the following advantages over the existing feeds: a) it requires less cereals as the essential feed component, b) it has a source of high-quality protein, c) it has a source of essential amino acids, particularly lysine, and d) given the properties of the earthworm flour's high protein and amino acid quality, the large quantities of protein found in the current feeds may be substantial reduced thanks to the earthworm flour, without the risk of losing nutritional capacity.

The feed made exclusively from earthworm flour has the following composition:

| | |
|---|---|
| Dry matter | 18.6% |
| Proteins | 70% |
| Fats and lipids | 6.56% |
| Fibre | 3.3% |
| Carbohydrates | 17.60% |
| Ashes | 7.59% |
| Calcium | 0.5% |
| Phosphorus | 0.90% |

The quantities of amino acids, vitamins and minerals may be seen in detail in the following table:

| **Composition of the Amino acids, vitamins and minerals** | | | |
|---|---|---|---|
| *** Essential amino acids Method used: Thin-layer chromatography.** | | **VITAMINS AND MINERALS** | |
| Alanine | 5.53 | Vit. A (retinol/caratene) | traces |
| * Arginine | 6.51 | Vit. B (thiamine) | 16 mg |
| Aspartic acid | 11.60 | Vit. B3 (niacin) | 36mg |
| Cysteine | 1.83 | Vit. B12 (cobalamine) | 6 mg |
| Glutamic acid | 14.20 | Vit. B6 (pyridoxine) | 6 mg |
| Glycine | 5.0 | Biotin (Vit. H) | 32 mg |
| * Histidine | 2.59 | Paraaminobenzoic acid (PABA) | 30 mg |
| * Isoleucine | 4.69 | Pantothenic acid (Vit. B15) | 10.3 mg |
| * Leucine | 7.59 | Folic acid (Vit. M) | 2.1 mg |
| * Lysine | 7.56 | Choline (Vit. B) | 275 mg |
| * Methionine | 2.20 | Lositol (Vit. B) | 359 mg |
| * Phenylalanine | 4.01 | Lipoic acid | traces |
| Proline | 5.03 | Vit. D | traces |
| Serine | 5.03 | Iron | 2.7 mg |
| * Tryptophan | 1.23 | Selenium | traces |
| * Threonine | 4.79 | Chromium | traces |
| Tyrosine | 2.97 | Calcium | traces |
| Valine | 5.0 | Phosphorus | traces |

The digestibility of Earthworm Flour is greater than 95%, which allows for a high absorption by the body of the nutrients which compose it. Thus, for example, ten minutes after being absorbed inside the small intestine, the amino acids in the earthworm flour are in the bloodstream, freely circulating such that they may feed those tissues that so require.

The invention may be described in detail in any of the examples described below.

### Example 1

Feed designed for feeding adult dogs

A feed is prepared based on the mixture of the elements, with the percentages in terms of the average nutritional analysis described below:

| | |
|---|---|
| Earthworm flour: | 0.01% |
| Protein: | 24.99% |
| Crude fat: | 12.00% |
| Natural crude fibre: | 3.00% |
| Phosphorus: | 1.30% |
| Calcium: | 1.30% |
| Magnesium: | 0.17% |
| Sodium: | 0.35% |
| Moisture: | 11.00% |
| Crude ashes: | 9.00% |
| Minerals and vitamins: | 0.25% |

### Example 2

Feed designed for feeding dogs with a high activity

A feed is prepared based on the mixture of the elements, with the percentages in terms of the average nutritional analysis described below:

| | |
|---|---|
| Earthworm flour: | 0.05% |
| Proton: | 29.95% |
| Crude fat: | 12.00% |
| Crude fibre: | 3.50% |
| Calcium: | 2.00% |
| Phosphorus: | 1.20% |
| Sodium: | 0.40% |
| Magnesium: | 0.20% |
| Crude ashes: | 9.00% |
| Moisture: | 9.50% |
| Minerals and vitamins: | 0.25% |

### Example 3

Feed designed for feeding obese or castrated dogs ("Light" feed)

A feed is prepared based on the mixture of the elements, with the percentages in terms of the average nutritional analysis described below:

| | |
|---|---|
| Earthworm flour: | 0.05% |
| Protein: | 19.90% |
| Crude fat: | 8.00% |
| Crude fibre: | 4.50% |
| Calcium: | 2.00% |
| Phosphorus: | 1.65% |
| Sodium: | 0.40% |
| Magnesium: | 0.15% |
| Crude ashes: | 9.00% |
| Moisture: | 10.00% |
| Minerals and vitamins: | 0.25% |

### Example 4

Feed designed for feeding adult cats

A feed is prepared based on the mixture of the elements, with the percentages in terms of the average nutritional analysis described below:

| | |
|---|---|
| Earthworm flour: | 0.06% |
| Crude protein: | 34.50% |
| Crude fats: | 16.00% |
| Crude fibre: | 1.50% |
| Calcium: | 1.10% |
| Phosphorus: | 1.00% |
| Sodium: | 0.35% |
| Magnesium: | 0.15% |
| Crude ashes: | 6.70% |
| Moisture: | 8.00% |
| Minerals and vitamins: | 0.25% |

### Example 5

Feed designed for feeding kittens

A feed is prepared based on the mixture of the elements, with the percentages in terms of the average nutritional analysis described below:

| | |
|---|---|
| Earthworm flour: | 0.07% |
| Crude protein: | 40.50% |
| Crude fats: | 20.00% |
| Crude fibre: | 1.50% |
| Calcium: | 1.20% |
| Phosphorus: | 1.00% |
| Sodium: | 0.35% |
| Magnesium: | 0.15% |
| Crude ashes: | 6.50% |
| Moisture: | 8.00% |
| Minerals and vitamins: | 0.25% |

### Example 6

Feed designed for feeding obese or castrated cats ("light" feed).

A feed is prepared based on the mixture of the elements, with the percentages in terms of the average nutritional analysis described below:

| | |
|---|---|
| Earthworm flour: | 0.06% |
| Crude protein: | 34.50% |
| Crude fats: | 9.00% |
| Crude fibre: | 3.00% |
| Calcium: | 1.00% |
| Phosphorus: | 0.80% |
| Sodium: | 0.35% |
| Magnesium: | 0.15% |
| Crude ashes: | 6.00% |
| Moisture: | 8.00% |
| Minerals and vitamins: | 0.25% |

### Example 7

Feed designed for feeding cats older than 10 years of age

A feed is prepared based on the mixture of the elements, with the percentages in terms of the average nutritional analysis described below:

| | |
|---|---|
| Earthworm flour: | 0.02% |
| Crude protein: | 36.50% |
| Crude fats: | 19.00% |
| Crude fibre: | 1.50% |
| Calcium: | 1.00% |
| Phosphorus: | 0.90% |
| Sodium: | 0.35% |
| Magnesium: | 0.15% |
| Crude ashes: | 6.40% |
| Moisture: | 8.00% |
| Minerals and vitamins: | 0.25% |

## Claims

1. Compound feed designed for animal nutrition, **characterised in that** it includes earthworm flour from the species *Eisenia foetida*, the proportion whereof in the final product is between 1 kg of earthworm flour for every 1,000 kg of feed and 100 kg of earthworm flour for every 1,000 kg of feed, values which, in the average nutritional analysis, range between 0.01 % and 0.10%.

2. Compound feed, as claimed in claim 1, designed for feeding adult dogs, the composition whereof contains, in addition to 0.01% of earthworm flour, the following components:
| | |
|---|---|
| Protein: | 24.99% |
| Crude fat: | 12.00% |
| Natural crude fibre: | 3.00% |
| Phosphorus: | 1.30% |
| Calcium: | 1.30% |
| Magnesium: | 0.17% |
| Sodium: | 0.35% |
| Moisture: | 11.00% |
| Crude ashes: | 9.00% |
| Minerals and vitamins | 0.25% |

3. Compound feed, as claimed in claim 1, designed for feeding dogs with a high activity, the composition whereof contains, in addition to 0.05% of earthworm flour, the following components:
| | |
|---|---|
| Protein: | 29.95% |
| Crude fat: | 12.00% |
| Crude fibre: | 3.50% |
| Calcium: | 2.00% |
| Phosphorus: | 1.20% |
| Sodium: | 0.40% |
| Magnesium: | 0.20% |
| Crude ashes: | 9.00% |
| Moisture: | 9.50% |

4. Compound feed, as claimed in claim 1, designed for feeding obese or castrated dogs, the composition whereof contains, in addition to 0.05% of earthworm flour, the following components:
| | |
|---|---|
| Earthworm flour: | 0.05% |
| Protein: | 19.90% |
| Crude fat: | 8.00% |
| Crude fibre: | 4.50% |
| Calcium: | 2.00% |
| Phosphorus: | 1.65% |
| Sodium: | 0.40% |
| Magnesium: | 0.15% |
| Crude ashes: | 9.00% |
| Moisture: | 10.00% |
| Minerals and vitamins: | 0.25% |

5. Compound feed, as claimed in claim 1, designed for feeding adult cats, the composition whereof contains, in addition to 0.06% of earthworm flour, the following components:
| | |
|---|---|
| Crude protein: | 34.50% |
| Crude fats: | 16.00% |
| Crude fibre: | 1.50% |
| Calcium: | 1.10% |
| Phosphorus: | 1.00% |
| Sodium: | 0.35% |
| Magnesium: | 0.15% |
| Crude ashes: | 6.70% |
| Moisture: | 8.00% |
| Minerals and vitamins: | 0.25% |

6. Compound feed, as claimed in claim 1, designed for feeding kittens, the composition whereof contains, in addition to 0.07% of earthworm flour, the following components:
| | |
|---|---|
| Crude protein: | 40.50% |
| Crude fats: | 20.00% |
| Crude fibre: | 1.50% |
| Calcium: | 1.20% |
| Phosphorus: | 1.00% |
| Sodium: | 0.35% |
| Magnesium: | 0.15% |
| Crude ashes: | 6.50% |
| Moisture: | 8.00% |
| Minerals and vitamins: | 0.25% |

7. Compound feed, as claimed in claim 1, designed for feeding obese or castrated cats, the composition whereof contains, in addition to 0.06% of earthworm flour, the following components:
| | |
|---|---|
| Crude protein: | 34.50% |
| Crude fats: | 9.00% |
| Crude fibre: | 3.00% |
| Calcium: | 1.00% |
| Phosphorus: | 0.80% |
| Sodium: | 0.35% |
| Magnesium: | 0.15% |
| Crude ashes: | 6.00% |
| Moisture: | 8.00% |
| Minerals and vitamins: | 0.25% |

8. Compound feed, as claimed in claim 1, designed for feeding cats older than 10 years of age, the composition whereof contains, in addition to 0.02% of earthworm flour, the following components:
| | |
|---|---|
| Crude protein: | 36.50% |
| Crude fats: | 19.00% |
| Crude fibre: | 1.50% |
| Calcium: | 1.00% |
| Phosphorus: | 0.90% |
| Sodium: | 0.35% |
| Magnesium: | 0.15% |
| Crude ashes: | 6.40% |
| Moisture: | 8.00% |
| Minerals and vitamins: | 0.25% |

9. Compound feed, as claimed in claims 2, 3, 4, 5, 6, 7 and 8, **characterised in that** the earthworm flour is obtained from the species *Eisenia foetida*.
